# FASCICULE DE BREVET EUROPEEN

(11) **EP 1 107 353 B1**
(45) Date de publication et mention de la délivrance du brevet: **18.03.2009**
(21) Numéro de dépôt: 00403462.5
(22) Date de dépôt: 11.12.2000
(51) Int. Cl.: H01Q 1/32, E05B 49/00, B60R 25/00

(54) **Véhicule automobile avec système d'accès sélectif du type "mains libres"**
Kraftfahrzeug mit selektivem handfreien ferngesteuerten Eingangssystem
Car with selective hands-free remote entry system

(30) Priorité: 09.12.1999 FR 9915529
(43) Date de publication de la demande: 13.06.2001
(73) Titulaire: VALEO SECURITE HABITACLE S.A.S., 94042 Créteil Cédex (FR)
(72) Inventeur: Tessier, Virginie, 94700 Maisons Alfort (FR); Pedemas, Didier, 94440 Marolles en Brie (FR)
(74) Mandataire: Rosolen-Delarue, Katell

(56) Documents cités:
- DE-C- 19 809 433
- US-A- 4 761 645
- US-A- 5 134 392
- US-A- 5 929 769

## Description

La présente invention concerne un véhicule automobile du type comprenant un système d'accès du type "mains libres", avec lequel un échange de données est établi par une communication bidirectionnelle sans fil entre un organe d'identification, destiné à être porté par un utilisateur autorisé du véhicule automobile, et un dispositif de reconnaissance qui est installé à bord du véhicule et qui comporte deux antennes émettrices disposées au niveau des côtés respectivement droit et gauche du véhicule, chaque antenne émettrice étant apte à rayonner un champ dans un espace englobant une partie de l'espace intérieur de l'habitacle du véhicule et une zone extérieure sur le côté correspondant, droit ou gauche, du véhicule, l'accès au véhicule ou d'autres fonctions de celui-ci n'étant autorisés que lorsque le dispositif de reconnaissance a authentifié l'organe d'identification.

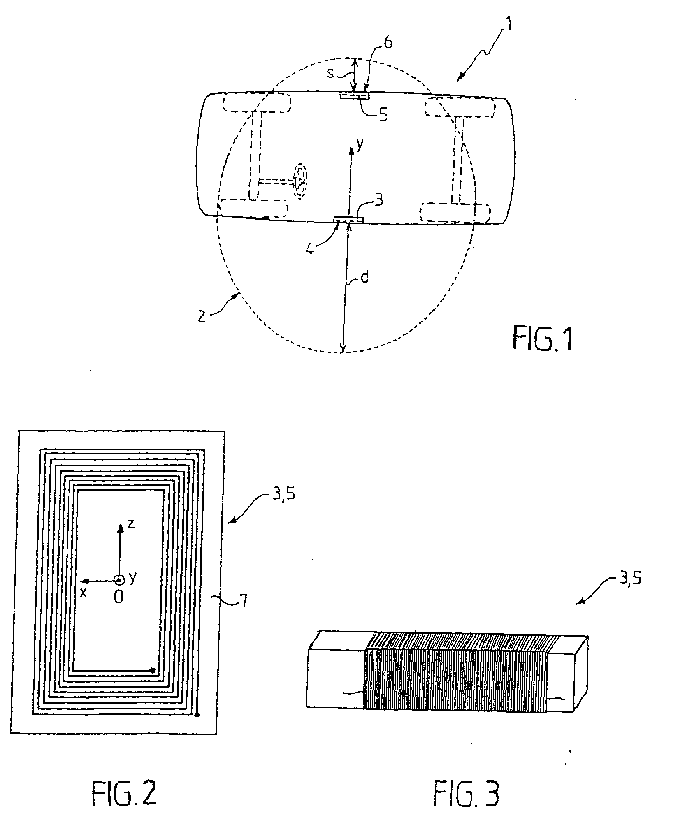

Il a déjà été proposé de placer les deux antennes, réalisées sous la forme de circuits imprimés sur un support flexible, respectivement dans la garniture interne du montant de porte (pied milieu ou montant B de la carrosserie du véhicule) du côté du conducteur et dans la garniture interne du montant de porte du côté du passager. Chaque antenne est implantée dans ladite garniture interne de telle façon que l'axe principal Oy de ses spires est perpendiculaire ou sensiblement perpendiculaire au plan médian longitudinal du véhicule automobile. La figure 1 des dessins annexés est une vue schématique de dessus d'un véhicule 1 montrant grossièrement, en tirets, le diagramme de rayonnement 2 ou limite de portée d'une antenne 3 positionnée dans la garniture interne du montant de porte 4 côté conducteur et émettant en basse fréquence. Les lignes du champ émis par cette antenne sont perturbées par la présence de la tôle de la carrosserie du véhicule automobile, particulièrement au niveau de ses deux portes côté conducteur. Par contre, les lignes du champ sont moins perturbées vers l'intérieur du véhicule. Ainsi, le rayonnement du champ est facilité vers l'intérieur du véhicule automobile, ce qui permet de détecter aussi la présence d'un organe d'identification à l'intérieur de l'habitacle du véhicule.

Lorsqu'on désire que l'antenne 3 ait une portée d importante du côté conducteur, à l'extérieur du véhicule 1, par exemple une portée d comprise entre 1,5 m et 2 m, l'antenne doit être alimentée avec une puissance électrique relativement importante. Comme le rayonnement de l'antenne est moins perturbé vers l'intérieur du véhicule que vers l'extérieur, il en résulte que l'antenne 3 située dans le montant de porte 4 côté conducteur rayonne aussi à l'extérieur du véhicule, côté passager, sur une distance s. Dans ce cas, un accès sélectif par côté est impossible puisque l'antenne 3 située dans la garniture interne du montant de porte 4 côté conducteur est capable de détecter aussi bien un utilisateur portant un organe d'identification, qui s'approche du véhicule côté passager, qu'un utilisateur portant un organe d'identification, qui s'approche du véhicule côté conducteur. Il en est de même pour l'antenne 5 située dans la garniture interne du montant de porte 6 côté passager.

Or, il serait souhaitable que l'accès au véhicule puisse être commandé de manière sélective en fonction du côté par lequel un utilisateur s'approche du véhicule. Par exemple, il serait souhaitable que les deux antennes 3 et 5 situées respectivement dans le montant de porte 4 côté conducteur et dans le montant de porte 6 côté passager, soient capables de détecter un organe d'identification situé à l'intérieur de l'habitacle de véhicule, que l'antenne 5 située dans le montant de porte 6 côté passager soit également capable de détecter un utilisateur portant un organe d'identification et situé à l'extérieur du véhicule, uniquement lorsqu'il s'approche du côté passager de celui-ci, et enfin, que l'antenne 3 située dans le montant de porte 4 côté conducteur soit capable de détecter aussi un utilisateur portant un organe d'identification et situé à l'extérieur du véhicule automobile, uniquement lorsqu'il s'approche du côté conducteur de celui-ci. Une telle sélectivité est intéressante, car elle permet, lorsque l'antenne 5 située du côté passager détecte qu'un utilisateur autorisé s'approche du véhicule de ce côté, de commander par exemple le déverrouillage des serrures des portes uniquement du côté passager, et lorsque l'antenne 3 située du côté conducteur détecte qu'un conducteur autorisé du véhicule s'approche de ce dernier du côté conducteur, de commander le déverrouillage des serrures des portes uniquement du côté conducteur (ou des deux côtés) et, en plus, d'autres fonctions comme par exemple le démarrage du moteur ou, dans le cas d'un moteur diesel, le préchauffage de celui-ci.

Pour résoudre ce problème de sélectivité, on pourrait réduire la puissance électrique du signal fourni aux antennes 3 et 5 et/ou le nombre de spires de ces dernières, afin de diminuer leur portée et, par suite, de réduire à zéro la distance s susmentionnée. Toutefois, une telle solution entraînerait bien évidemment une réduction importante non souhaitée de la portée de chaque antenne vers l'extérieur du véhicule automobile du même côté que l'antenne concernée (distance d pour l'antenne 3).

Par ailleurs, le document US 5,929,769 décrit un système d'accès « mains libres » pour lequel le déverrouillage et/ou l'ouverture d'un ouvrant ne se produit que lorsque le transpondeur est présenté, à ou aux antennes situées sur ou à proximité dudit ouvrant, selon une séquence prédéterminée ; le document US 4,761,645 décrit un système d'accès « mains libres » associé à un blocage de colonne de direction, dans lequel des antennes émettrices sont situés sur la surface externe du véhicule à proximité du dispositif devant être actionné ; enfin le document US 5,134,392 décrit un système d'accès « mains libres », dans lequel des antennes émettrices peuvent être montées dans la portion supérieure d'une garniture couvrant un pilier central du véhicule.

La présente invention a donc pour but de fournir une solution au problème de sélectivité par côté, sans réduire la portée de chaque antenne vers l'extérieur du véhicule, du côté où elle se trouve.

A cet effet, le véhicule automobile selon l'invention est tel que défini dans la revendication 1.

De préférence, l'une des deux antennes est portée par un élément de garniture qui est fixé sur un élément de porte du côté externe gauche de la carrosserie du véhicule, tandis que l'autre antenne est portée par un élément de garniture qui est fixé sur un élément de porte du côté externe droit de la carrosserie du véhicule.

De manière encore plus préférentielle, le montant de porte est un pilier milieu ou montant B de la carrosserie.

Dans ces conditions, les lignes de champ vers l'extérieur du véhicule sont beaucoup moins perturbées que dans le cas où l'antenne était installée, de façon connue, dans la garniture interne du montant de porte. Il en résulte que, à puissance électrique égale fournie à l'antenne, la localisation, selon l'invention, de l'antenne du côté externe du montant de porte favorise, c'est à dire augmente la portée d de l'antenne vers l'extérieur du véhicule, du même côté que l'antenne concernée. Inversement, les lignes de champ vers l'intérieur de l'habitacle sont plus perturbées que dans le cas où l'antenne est placée du côté interne du montant de porte, de sorte que, à puissance électrique égale fournie à l'antenne, la portée de l'antenne vers l'intérieur de l'habitacle est plus faible. Ceci permet donc de réduire la distance s, voire de l'annuler. Si, après localisation de l'antenne conformément à la présente invention, la distance s n'est pas encore complètement annulée ou si elle est complètement annulée, mais si on n'a pas besoin d'une portée d accrue, dans les deux cas on peut réduire la puissance électrique fournie à l'antenne. On peut ainsi réaliser des économies d'énergie.

Selon une première mise en oeuvre, chacune des deux antennes peut être avantageusement réalisée par une technique d'impression sur un support diélectrique, de préférence sous la forme d'une feuille mince et flexible. Cela permet de réaliser une antenne de faible épaisseur et de la positionner contre une pièce de support qui n'est pas forcément plane.

Selon une seconde mise en oeuvre, chaque antenne est réalisée par une technique de bobinage d'un fil conducteur sur un support approprié. De préférence, le support approprié est réalisés sous la forme d'un noyau ferrite et dans ce cas, l'antenne est un peu plus épaisse qu'une antenne obtenue par un technique d'impression sur diélectrique.

Avantageusement, dans cette seconde mise en oeuvre utilisant une antenne de type ferrite, l'antenne peut être agencée de deux manières différentes de telle sorte que:
- Soit son axe longitudinal est positionné dans la largeur du montant du porte,
- Soit son axe longitudinal est positionné suivant l'axe longitudinal du montant de porte.

Dans un mode de réalisation de l'invention, chaque antenne peut être recouverte d'un film adhésif et collée contre une face interne de l'élément de garniture tournée vers une face externe du pilier milieu ; une coque de protection en une matière polymère peut être fixée à la face interne de l'élément de garniture par-dessus l'antenne ; l'ensemble résultant peut être ensuite fixé à la face externe du pilier milieu.

Dans un autre mode de réalisation de l'invention, chaque antenne peut être enfermée entre deux coques de protection qui sont ensuite fixées à une face interne de l'élément de garniture tournée vers une face externe du pilier milieu, l'ensemble résultant étant ensuite fixée à la face externe du pilier milieu.

Selon encore un autre mode de réalisation de l'invention, chaque antenne peut être surmoulée directement sur l'élément de garniture en une matière polymère électriquement isolante, et l'ensemble résultant peut être ensuite fixé à la face externe du pilier milieu.

D'autres caractéristiques et avantages de l'invention ressortiront mieux au cours de la description suivante de divers modes de réalisation de l'invention donnés à titre d'exemple en référence aux dessins annexés sur lesquels :
- la figure 1 est une vue très schématique de dessus d'un véhicule automobile équipé d'un système d'accès du type "mains libres" comportant deux antennes émettrices installées à l'intérieur au niveau des piliers milieu du véhicule automobile,
- la figure 2 est une vue de face d'une premier catégorie d'antenne utilisable dans le véhicule de la figure 1,
- la figure 3 est une vue en perspective d'une seconde catégorie d'antenne (antenne ferrite) utilisable dans le véhicule de la figure 1,
- la figure 4 représente, de manière très schématique, deux des portières latérales du véhicule automobile et le pilier milieu situé entre elles, l'ensemble étant vu depuis l'extérieur du véhicule,
- la figure 5 illustre, de manière schématique, un premier mode d'intégration de la première catégorie d'antenne, sur la face externe du pilier milieu,
- la figure 6 illustre, de manière également schématique, un second mode d'intégration de la première catégorie d'antenne, sur la face externe du pilier milieu,
- la figure 7 illustre, de manière également schématique, un troisième mode d'intégration de la première catégorie d'antenne, sur la face externe du pilier milieu,
- la figure 8 illustre de manière schématique, un premier agencement d'antenne ferrite sur la face externe du pilier milieu, selon le premier mode d'intégration , et
- la figure 9 illustre de manière également schématique, un second agencement d'antenne ferrite sur la face externe du pilier milieu, selon le premier mode d'intégration.

La figure 1 ayant déjà été décrite plus haut ne sera pas décrite, à nouveau, en détail ici. On précisera simplement que le véhicule selon l'invention peut être semblable à celui de la figure 1, excepté que les deux antennes émettrices 3 et 5 sont disposées respectivement dans un élément de garniture externe du pilier milieu 4 et dans un élément de garniture externe du pilier milieu 6, eux-mêmes disposés respectivement du côté conducteur et du côté passager du véhicule 1 (ces piliers milieu 4 et 6 sont aussi appelés pilier ou montant B par les hommes de l'art).

Chacune des deux antennes 3, 5 peut être constituée, selon une première catégorie d'antenne, par une antenne imprimée sur un support diélectrique 7, comme montré sur la figure 2. Ce support diélectrique 7 est, de préférence, constitué par une feuille mince en une matière plastique semi-rigide ou souple.

Chacune des deux antennes 3, 5 peut être également constituée, selon une seconde catégorie d'antenne, par une antenne ferrite réalisée par une technique de bobinage d'un fil conducteur sur un support approprié, comme montré sur la figure 3. Ce support approprié est, de préférence, constitué par un noyau de ferrite.

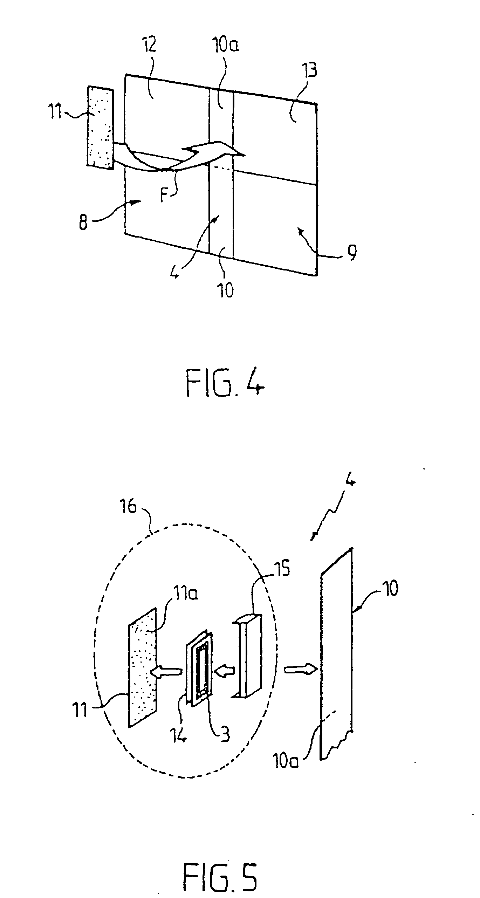

En se reportant à la figure 4, on peut voir deux des portières latérales du véhicule 1 de la figure 1, par exemple la porte avant gauche 8 et la porte arrière gauche 9, ainsi que le pilier milieu 4 situé entre elles. Ce pilier milieu 4 est constitué, de façon classique, par un élément métallique 10, en une ou plusieurs pièces assemblées entre elles, qui s'étend verticalement depuis le bas de caisse (non montré) jusqu'au toit ou pavillon (également non montré) du véhicule. Sur la figure 4, on peut encore voir un élément de garniture externe 11, en une matière plastique, par exemple un polymère, qui est destiné à être appliqué et fixé contre la face externe 10a de l'élément métallique 10 du pilier milieu 4, dans la moitié supérieure de celui-ci, comme cela est schématiquement illustré par la flèche F dans la figure 4. L'élément de garniture 11 peut avoir, par exemple, une étendue verticale correspondant à celle des vitres latérales 12 et 13 des portes 8 et 9. Toutefois, il va de soi que, si on le désire, l'élément de garniture 11 pourrait avoir une étendue verticale égale à celle de l'élément métallique 10.

La figure 5 illustre une première façon d'installer l'antenne 3 contre la face externe 10a de l'élément métallique 10 du pilier milieu 4. Dans ce cas, l'antenne 3, par exemple une antenne telle que celle représentée sur la figure 2, est recouverte d'un film adhésif 14, puis elle est ensuite collée sur la face interne 11a de l'élément de garniture 11. Ensuite, une coque de la protection 15 en matière plastique, par exemple en polymère, est fixée à la face interne 11a de l'élément de garniture 11, par-dessus l'antenne 3, par collage, par clipsage ou par tout autre moyen approprié. L'ensemble résultant 16, formé de l'antenne 3, de l'élément de garniture 11 et de la coque de protection 15, est ensuite fixé contre la face externe 10a de l'élément métallique 10 du pilier milieu 4, par exemple à l'aide de clips comme cela est usuel dans le domaine de l'automobile pour fixer des éléments de garniture sur une tôle de la carrosserie, ou par tout autre moyen approprié.

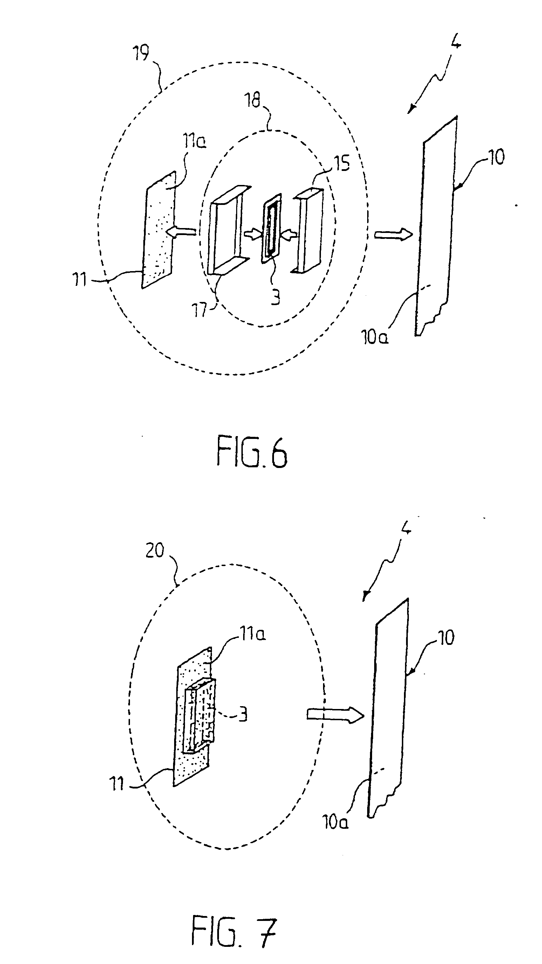

La figure 6 illustre une seconde façon d'installer l'antenne 3 sur la face externe 10a d'un élément métallique 10 du pilier milieu 4. L'antenne 3, par exemple une antenne comme celle représentée sur la figure 2, est tout d'abord enfermée entre deux coques de protection 15 et 17, qui sont maintenues assemblées entre elles, par exemple par collage ou par clipsage. L'ensemble 18 ainsi obtenu est ensuite fixé contre la face interne 11a de l'élément de garniture 11 par exemple par collage, et l'ensemble résultant 19 est ensuite fixé contre la face externe 10a de l'élément métallique 10, d'une manière semblable à celle décrite plus haut, à propos du mode de réalisation de la figure 5.

La figure 7 illustre une troisième façon d'installer l'antenne 3 contre la face externe 10a de l'élément métallique 10 du pilier milieu 4. Dans ce cas, l'antenne 3 est surmoulée dans l'élément de garniture externe 11, par exemple sur la face interne 11a de celui-ci. L'ensemble résultant 20 est ensuite fixé sur la face externe 10a de l'élément métallique 10 d'une façon semblable à celle décrite plus haut à propos du mode de réalisation de la figure 5.

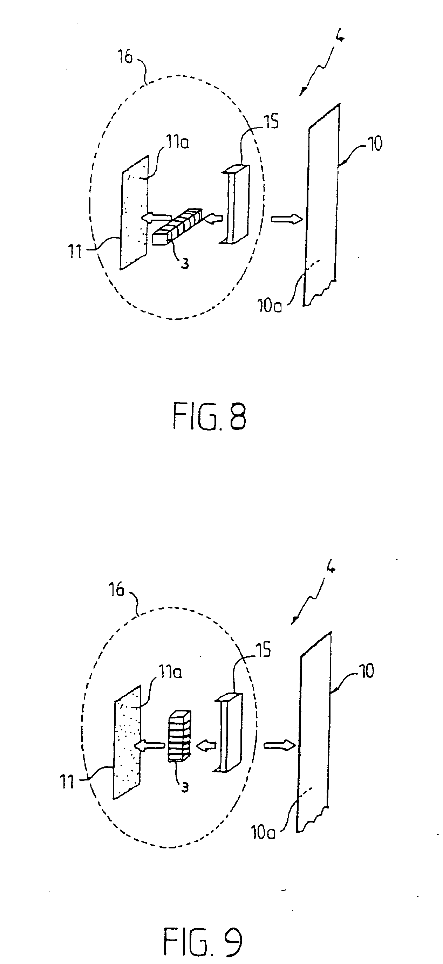

La figure 8 illustre l'installation d'une antenne 3, telle que celle présentée à la figure 3, contre la face externe 10a de l'élément métallique 10 du pied milieu (montant de porte) selon un premier agencement possible. L'antenne est agencée de façon qu'en fin de mise en place, son axe longitudinal soit positionné dans la largeur de m'élément métallique 10 du montant de porte 4. L'antenne 3 est collée sur la face interne 11a de l'élément de garniture 11 et une coque protection 15 en matière plastique, par exemple en polymère, est ensuite fixée à la face interne 11a de l'élément de garniture 11, par-dessus l'antenne 3, par collage, par clipsage ou par tout autre moyen approprié. L'ensemble résultant 16, formé de l'antenne 3, de l'élément de garniture 11 et de la coque de protection 15, est ensuite fixé contre la face externe 10a de l'élément métallique 10 du pilier milieu 4, par exemple à l'aide de clips comme cela est usuel dans le domaine de l'automobile pour fixer des éléments de garniture sur une tôle de la carrosserie, ou par tout autre moyen approprié.

La figure 9 illustre l'installation d'une antenne 3, telle que celle présentée à la figure 3, contre la face externe 10a de l'élément métallique 10 du pilier milieu 4 selon un second agencement possible. L'antenne est agencée de façon qu'en fin de mise en place, son axe longitudinal soit positionné suivant l'axe longitudinal du montant de porte 4. L'antenne 3 est collée sur la face interne 11a de l'élément de garniture 11 et une coque protection 15 en matière plastique, par exemple en polymère, est ensuite fixée à la face interne 11a de l'élément de garniture 11, par-dessus l'antenne 3, par collage, par clipsage ou par tout autre moyen approprié. L'ensemble résultant 16, formé de l'antenne 3, de l'élément de garniture 11 et de la coque de protection 15, est ensuite fixé contre la face externe 10a de l'élément métallique 10 du pilier milieu 4, par exemple à l'aide de clips comme cela est usuel dans le domaine de l'automobile pour fixer des éléments de garniture sur une tôle de la carrosserie, ou par tout autre moyen approprié.

Dans cet agencement, l'émission de l'antenne 3 se fera préférentiellement vers l'extérieur du véhicule et permettra de mettre en oeuvre un procédé pour que l'accès au véhicule puisse être commandé de manière sélective en fonction du côté par lequel un utilisateur s'approche du véhicule.

L'utilisation d'antennes ferrites est très avantageuse car cette catégorie d'antenne est moins perturbée par le métal que d'autres d'antennes telles que les antennes filaires par exemple.

Dans tous les cas, il peut être nécessaire de percer un trou dans l'élément métallique 10 du pied milieu 4 afin de faire passer le faisceau de fil d'alimentation de l'antenne 3, de l'intérieur de l'habitacle du véhicule vers l'extérieur du pilier milieu 4.

Bien entendu, l'antenne 5 peut être installée du côté externe du pilier milieu 6 d'une façon semblable à celle décrite à propos de l'antenne 3 et du pilier milieu 4.

Il est du reste bien entendu que les modes de réalisation de l'invention qui ont été décrits ci-dessus ont été donnés à titre d'exemple purement indicatifs et nullement limitatifs, et que de nombreuses modifications peuvent être apportées sans pour autant sortir du cadre de l'invention.

## Revendications

1. Véhicule automobile du type comprenant un système d'accès du type "mains libres", avec lequel un échange de données est établi par une communication bidirectionnelle sans fil entre un organe d'identification, destiné à être porté par un utilisateur autorisé du véhicule automobile, et un dispositif de reconnaissance qui est installé à bord du véhicule et qui comporte deux antennes émettrices (3, 5) disposées au niveau des côtés respectivement droit et gauche du véhicule, chaque antenne émettrice étant apte à rayonner un champ dans un espace englobant une partie de l'espace intérieur de l'habitacle du véhicule (1) et une zone extérieure sur le côté correspondant, droit ou gauche, du véhicule, l'accès au véhicule ou d'autres fonctions de celui-ci n'étant autorisés que lorsque le dispositif de reconnaissance a authentifié l'organe d'identification, **caractérisé en ce qu'**au moins une des antennes (3, 5) est portée par un élément de garniture (11) en une matière électriquement isolante, qui est fixé sur un montant de porte (4 ou 6) du côté externe de la carrosserie du véhicule.

2. Véhicule automobile selon la revendication 1, **caractérisé en ce que** l'une (3) des deux antennes est portée par un élément de garniture (11) qui est fixé sur le montant de porte (4) du côté externe gauche de la carrosserie du véhicule (1), tandis que l'autre antenne (5) est portée par un élément de garniture qui est fixé sur le montant de porte (6) du côté externe droit de la carrosserie du véhicule.

3. Véhicule automobile selon la revendication 2, **caractérisé en ce que** le montant de porte (4 ou 6) est un pilier milieu ou montant B de la carrosserie (1).

4. Véhicule automobile selon l'une quelconque des revendications 1 à 3, **caractérisé en ce que** chacune des deux antennes (3, 5) est réalisée par une technique d'impression sur un support diélectrique (7).

5. Véhicule automobile selon la revendication 4, **caractérisé en ce que** le support diélectrique est une feuille mince et flexible.

6. Véhicule automobile selon l'une quelconque des revendications 1 à 3, **caractérisé en ce que** chacune des deux antennes (3, 5) est réalisée par une technique de bobinage d'un fil conducteur sur un support approprié.

7. Véhicule automobile selon la revendication 6, **caractérisé en ce que** l'antenne (3, 5) est agencée de telle sorte que son axe longitudinal est positionné dans la largeur du montant du porte (4, 6).

8. Véhicule automobile selon la revendication 6, **caractérisé en ce que** l'antenne (3, 5) est agencée de telle sorte que son axe longitudinal est positionné suivant l'axe longitudinal du montant de porte (4, 6).

9. Véhicule automobile selon l'une quelconque des revendications 3 à 8**, caractérisé en ce que** chaque antenne (3, 5) est recouverte d'un film adhésif (14) et collée contre une face interne (11a) de l'élément de garniture (11) tournée vers une face externe (10a) du pilier milieu (4, 10), **en ce qu'**une coque de protection (15) en une matière polymère est fixée à la face interne (11a) de l'élément de garniture (11) par-dessus l'antenne (3), et **en ce que** l'ensemble résultant (16) est ensuite fixé à ladite face externe (10a) du pilier milieu (4, 10).

10. Véhicule automobile selon l'une quelconque des revendications 3 à 8, **caractérisé en ce que** chaque antenne (3, 5) est enfermée entre deux coques de protection (15, 17) qui sont ensuite fixées à une face interne (11a) de l'élément de garniture (11) tournée vers une face externe (10a) du pilier milieu (4, 10), et **en ce que** l'ensemble résultant (19) est ensuite fixé à ladite face externe (10a) du pilier milieu (4, 10).

11. Véhicule automobile selon l'une quelconque des revendications 3 à 5, **caractérisé en ce que** chaque antenne (3, 5) est surmoulée directement sur l'élément de garniture (11) en une matière polymère électriquement isolante, et **en ce que** l'ensemble résultant (20) est ensuite fixé à la face externe (10a) du pilier milieu (4, 10).

## Claims

1. Automobile vehicle of the type including a "hands free" type access system, with which a data exchange is set up by a two-directional wireless communication between an identification device that will be worn by an authorised user of an automobile vehicle, and a recognition device that is installed onboard the vehicle and that comprises two emitting antennas (3, 5) located on the right and left sides of the vehicle, each emitting antenna being capable of radiating a field within a space encompassing a part of the space inside the vehicle passenger compartment (1), and an external zone on the corresponding right or left side of the vehicle, access to the vehicle or other vehicle functions only being authorised when the recognition device has authenticated the identification device, **characterised in that** at least one of the antennas (3, 5) is carried by a trim element (11) made of an electrically insulating material that is fixed on an upright of the door (4 or 6) on the outside of the vehicle bodywork.

2. Automobile vehicle according to claim 1, **characterised in that** one (3) of the two antennas is supported by a trim element (11) fixed to the door upright (4) on the outside of the left side of the vehicle bodywork (1), while the other antenna (5) is supported by a trim element fixed to the door upright (6) on the outside of the right side of the vehicle bodywork.

3. Automobile vehicle according to claim 2, **characterised in that** the door upright (4 or 6) is a middle pillar or an upright B of the bodywork (1).

4. Automobile vehicle according to any one of claims 1 to 3, **characterised in that** each of the two antennas (3, 5) is made by a printing technique on a dielectric support (7).

5. Automobile vehicle according to claim 4, **characterised in that** the dielectric support is a thin flexible film.

6. Automobile vehicle according to any one of claims 1 to 3, **characterised in that** each of the two antennas (3, 5) is made by a winding technique of a conducting wire onto an appropriate support.

7. Automobile vehicle according to claim 6, **characterised in that** the antenna (3, 5) is arranged such that its longitudinal axis is placed within the width of the door upright (4, 6).

8. Automobile vehicle according to claim 6, **characterised in that** the antenna (3, 5) is arranged such that its longitudinal axis is placed along the longitudinal axis of the door upright (4, 6).

9. Automobile vehicle according to any one of claims 3 to 8, **characterised in that** each antenna (3, 5) is covered with an adhesive film (14) and is glued in contact with an internal face (11a) of the trim element (11) facing an outside face (10a) of the middle pillar (4, 10), **in that** a protection shell (15) made of a polymer material is fixed to the inside face (11a) of the trim element (11) above the antenna (3), and **in that** the resulting assembly (16) is then fixed to said external face (10a) of the middle pillar (4, 10).

10. Automobile vehicle according to any one of claims 3 to 8, **characterised in that** each antenna (3, 5) is enclosed between two protection shells (15, 17) that are then fixed to an internal face (11a) of the trim element (11) facing an external face (10a) of the middle pillar (4, 10), and **in that** the resulting assembly (19) is then fixed to said external face (10a) of the middle pillar (4, 10).

11. Automobile vehicle according to any one of claims 3 to 5, **characterised in that** each antenna (3, 5) is insert moulded directly onto the trim element (11) made of an electrically insulating polymer material, and **in that** the resulting assembly (20) is then fixed to the external face (10a) of the middle pillar (4, 10).

## Patentansprüche

1. Kraftfahrzeug mit einem handfreien Zugangssystem, mit dem über eine drahtlose bidirektionale Kommunikation zwischen einem von einem autorisierten Benutzer des Kraftfahrzeuges mitzuführenden Identifikationselement und einer an Bord des Fahrzeugs installierten Erkennungsvorrichtung, die zwei jeweils an der rechten und an der linken Seite des Fahrzeugs angeordnete Sendeantennen (3, 5) umfasst, ein Datenaustausch stattfindet, wobei jede Sendeantenne innerhalb eines einen Teil des Innenraumes des Fahrzeugs (1) und einen Außenbereich auf der betreffenden rechten bzw. linken Seite des Fahrzeugs umfassenden Raum ein Feld abstrahlen kann, der Zugang zum Fahrzeug oder anderen Funktionen des Fahrzeugs nur freigegeben werden, wenn die Erkennungsvorrichtung das Identifikationselement authentifiziert hat, **dadurch gekennzeichnet, dass** mindestens eine der Antennen (3, 5) von einem Dichtungselement (11) aus einem elektrisch isolierendem Material getragen wird, das an einem Türpfosten (4 bzw. 6) auf der Außenseite der Fahrzeugkarosserie angebracht ist.

2. Kraftfahrzeug nach Anspruch 1, **dadurch gekennzeichnet, dass** eine (3) der beiden Antennen von einem Dichtungselement (11) getragen wird, das an dem Türpfosten (4) auf der linken Außenseite der Fahrzeugkarosserie (1) angebracht ist, während die andere Antenne (5) von einem Dichtungselement getragen wird, das an dem Türpfosten (6) auf der rechten Außenseite der Fahrzeugkarosserie angebracht ist.

3. Kraftfahrzeug nach Anspruch 2, **dadurch gekennzeichnet, dass** der Türpfosten (4 bzw. 6) eine Mittelsäule oder B-Säule der Karosserie (1) ist.

4. Kraftfahrzeug nach einem der Ansprüche 1 bis 3, **dadurch gekennzeichnet, dass** jede der beiden Antennen (3, 5) durch Bedrucken eines dielektrischen Trägers (7) gebildet wird.

5. Kraftfahrzeug nach Anspruch 4, **dadurch gekennzeichnet, dass** der dielektrische Träger eine dünne und flexible Folie ist.

6. Kraftfahrzeug nach einem der Ansprüche 1 bis 3, **dadurch gekennzeichnet, dass** jede der beiden Antennen (3, 5) durch Bewickeln eines geeigneten Trägers mit einem leitenden Draht gebildet wird.

7. Kraftfahrzeug nach Anspruch 6, **dadurch gekennzeichnet, dass** die Antenne (3, 5) so angeordnet ist, dass ihre Längsachse in der Breite des Türpfostens (4, 6) verläuft.

8. Kraftfahrzeug nach Anspruch 6, **dadurch gekennzeichnet, dass** die Antenne (3, 5) so angeordnet ist, dass ihre Längsachse in der Längsachse des Türpfostens (4, 6) verläuft.

9. Kraftfahrzeug nach einem der Ansprüche 3 bis 8, **dadurch gekennzeichnet, dass** jede Antenne (3, 5) mit einem Klebefilm (14) versehen und auf eine einer Außenseite (10a) der Mittelsäule (4, 10) zugewandten Innenseite (11a) des Dichtungselementes (11) geklebt wird, dass eine Schutzschale (15) aus einem Polymermaterial an der Innenseite (11a) des Dichtungselementes (11) über die Antenne (3) hinweg angebracht wird und dass die sich ergebende Anordnung (16) anschließend an der Außenseite (10a) der Mittelsäule (4, 10) befestigt wird.

10. Kraftfahrzeug nach einem der Ansprüche 3 bis 8, **dadurch gekennzeichnet, dass** jede Antenne (3, 5) zwischen zwei Schutzschalen (15, 17) eingeschlossen wird, die anschließend an eine einer Außenseite (10a) der Mittelsäule (4, 10) zugewandten Innenfläche (11a) des Dichtungselementes (11) angebracht werden, und dass die sich ergebende Anordnung (19) anschließend an der Außenseite (10a) der Mittelsäule (4, 10) befestigt wird.

11. Kraftfahrzeug nach einem der Ansprüche 3 bis 5, **dadurch gekennzeichnet, dass** jede Antenne (3, 5) aus einem elektrisch isolierenden Polymermaterial an dem Dichtungselement direkt angespritzt wird und dass die sich ergebende Anordnung (20) anschließend an der Außenseite (10a) der Mittelsäule (4, 10) befestigt wird.
